# EUROPEAN PATENT SPECIFICATION

(11) **EP 1 649 385 B1**
(45) Date of publication and mention of the grant of the patent: **20.05.2015**
(21) Application number: 04740840.6
(22) Date of filing: 09.07.2004
(51) Int. Cl.: G06F 17/30

(54) **A SYSTEM AND METHOD FOR EXTRACTING DATA SETS FROM AN ONLINE RELATIONAL DATABASE INTO A DATA WAREHOUSE**
SYSTEM UND VERFAHREN ZUM EXTRAHIEREN VON DATENSÄTZEN AUS EINER RELATIONALEN ONLINE-DATENBANK IN EIN DATEN-WAREHOUSE
PROCEDE ET SYSTEME D'EXTRACTION DE DONNEES D'UNE BASE DE DONNEES RELATIONNELLE A UN DEPOT DE DONNEES

(30) Priority: 22.07.2003 EP 03016500
(43) Date of publication of application: 26.04.2006
(73) Proprietor: SAP SE, 69190 Walldorf (DE)
(72) Inventor: CHRISTIAN, Günther, 68163 Mannheim (DE); AAKOLK, Michael, 69168 Wiesloch (DE); KOUNTZ, Jochen, 68766 Hockenheim (DE); ADAL, Nuran, 34744 Bostanci-Istanbul (TR)
(74) Representative: Richardt Patentanwälte PartG mbB
(86) International application number: PCT/EP2004/007554
(87) International publication number: WO 2005/015437

(56) References cited:
- EP-A2- 1 324 520
- US-A- 5 697 051
- US-A- 6 125 368
- RAM P ET AL: "Extracting delta for incremental data warehouse maintenance" DATA ENGINEERING, 2000. PROCEEDINGS. 16TH INTERNATIONAL CONFERENCE ON SAN DIEGO, CA, USA 29 FEB.-3 MARCH 2000, LOS ALAMITOS, CA, USA,IEEE COMPUT. SOC, US, 29 February 2000 (2000-02-29), pages 220-229, XP010378715 ISBN: 0-7695-0506-6
- MILLS D L: "INTERNET TIME SYNCHRONIZATION: THE NETWORK TIME PROTOCOL" IEEE TRANSACTIONS ON COMMUNICATIONS, IEEE INC. NEW YORK, US, vol. 39, no. 10, 1 October 1991 (1991-10-01), pages 1482-1493, XP000275311 ISSN: 0090-6778

## Description

### Field of the invention

The present invention relates in general to a data extraction technique and, in particular, to a method and a system for providing data sets to a data warehouse.

### Background and prior art

Enterprise database systems can be divided into two categories: operational and informational. Operational databases function as repositories for data produced by online transaction processing systems of the manufacturing, production, and transactional systems. On the other hand, informational databases store data periodically extracted from operational databases for use in decision support and information processing systems. Informational databases include data warehouses.

Data warehouses, like for example SAP Business Warehouse (BW), were designed and developed as a solution to problems of users submitting queries directly, slowing down the performance of online transaction processing systems which require a minimum guaranteed response time with uninterrupted availability and jeopardizing important production system functions. This, along with the risks associated with giving the extended e-business enterprise direct access to online transaction processing systems, constituted urgent necessity to store data in an environment that is not only optimised for business analysis and reporting, but also for secure broad access. Thus, creation of data warehouse made possible for users to query the separate data warehouse database without impacting the operational databases.

In the prior art, however, data warehouses were updated by periodically copying the entire database of the online transaction processing system, such process was quite lengthy and caused substantial data duplication.

Moreover, in the prior art the source data had to undergo extensive aggregation as it was transferred to the warehouse and the information was only available for analysis in the summarized form not allowing the investigation on the level of the single items.

For example, the paper "Extracting Delta for Incremental Data Warehouse Maintenance" of Prabhu Ram and Lyman Do, 0-7695-0506-6/00 © 2000 IEEE describe the extraction of changes to the data at the source systems as the first step in the incremental maintenance of data warehouses.

Mills D L: "internet time synchronization: the network time protocol", IEEE Transactions on communications, vol. 39, no. 10, 1. October 1991, p. 1482-1493, XP000275311, ISSN: 0090-6778 describes the network time protocol (NTP), which is designed to distribute time information in a large, diverse internet system.

US005697051A describes a clock synchronization system for synchronizing a number of paging stations with a system controller. Each paging station has a clock that includes a counter that indicates the current local time and which is sequentially incremented by a counter advance signal applied thereto.

EP1324520 A2 describes a distributed system with a timing signal path for increased precision in time synchronization among distributed system clocks.

### Summary of the invention

The present invention provides a system and method for updating a data warehouse database with data retrieved from a online relational database by executing a query of source data to obtain a subset of the data sets having predetermined timestamps. The timestamping of the data sets allows extraction of only those data sets that have changed since the last extraction point. The data sets that have been already imported stay unchanged and do not need to be deleted at the time of the new import. Thus, the copying of the entire data base is avoided.

Nevertheless, in order to prevent any data from being omitted during the extraction process a time window has to be determined. Lower and upper limits of the time window for extraction of data sets are defined in such a way that first reference time is a lower limit, the first reference time being the time of the previous database query (t1) minus a time interval (delta). However, upper limit of the extraction time window depends on the embodiment of the invention. In one embodiment, upper limit is equal to actual system time when query is performed.

In another embodiment, upper limit is equal to actual system time minus time interval (delta). In any case, the time window that assures not omitting any data sets during the extraction process must be sufficiently large that all data sets which have received a timestamp at the time of the last extraction but were not imported yet, can be included in the most recent extraction.

Timestamped data sets are stored in an online relational database. Subsets of data sets retrieved from the online relational database of the OLTP system are then sent to data warehouse where duplicate subsets are filtered out with the use of ODS objects, if necessary, and subsets of informational data can be analyzed by the user on the level of the single items using a drilldown reporting.

The present invention solves the problems of the prior art by updating the data warehouse with short, frequent queries, since only the data sets that have changed since the last extraction point are imported. The data sets that have been already imported stay unchanged and do not need to be deleted at the time of the new import. The new updates are no longer as time consuming as the entire database replication and extensive duplication of data is avoided. Moreover, the invention enables analysis of single budget items and reporting in the data warehouse. Thus, there is no longer a limit of only the summarized data being available in the data warehouse but all the single item data is loaded into the data warehouse with the help of views.

Data warehouse for the first time in budgeting can mirror the online transaction processing system in the level of detail available, making possible for managers to quickly analyze the underlying causes of budget irregularities by using so called drilldown reporting and not only the aggregate data as it was the case in the prior art. This last point is very important in the light of the fact that budget unlike plan is binding and if the changes in the budget cannot be analyzed in detail as soon as they are introduced and appropriate actions are not taken this may result in considerable costs overruns later on in the project.

### Brief description of the drawings

- Figure 1: is a block diagram showing a multi-tiered database architecture providing the function of timestamping the data sets, storing of the data sets in an online relational database, executing queries against online relational database, and sending the subsets to the data warehouse.
- Figure 2: is a flow chart showing a method of providing data subsets to a data warehouse.
- Figure 3: is a diagram showing an embodiment of the invention where a data warehouse queries BW1 and BW2 of online relational database are executed to obtain a subset of the data sets having predetermined timestamps.
- Figure 4: is a diagram showing an embodiment of the invention where a data warehouse data queries BW1 and BW2 of online relational database are executed to obtain a subset of the data sets having predetermined timestamps plus a time window.
- Figure 5: is a detailed block diagram showing the system of providing data sets to the data warehouse.
- Figure 6: is a block diagram showing the data processing system for providing data sets to a warehouse of Figure 1 with multiple posting systems.

### Detailed description

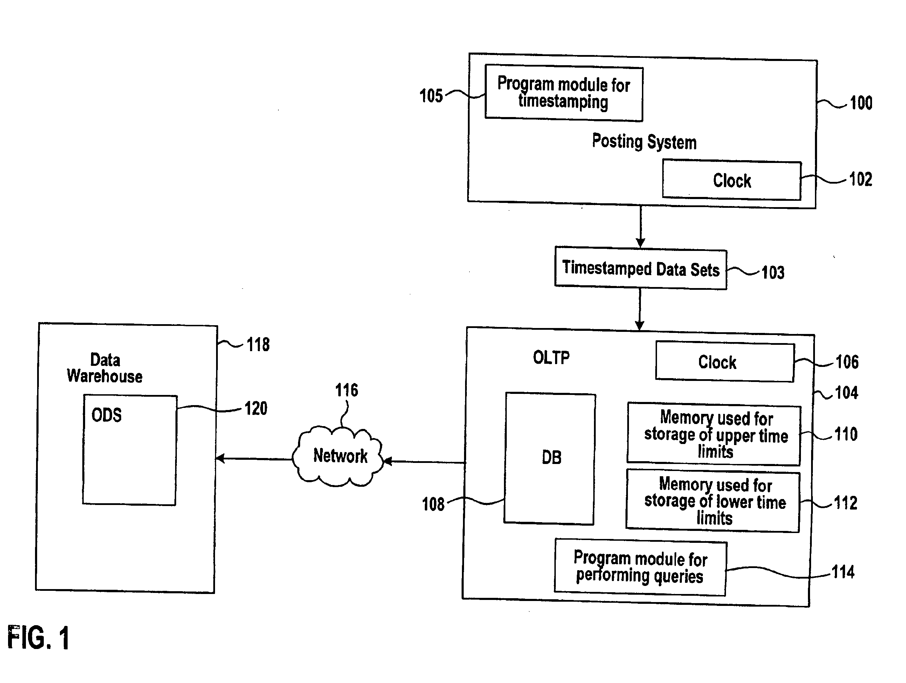

Figure 1 illustrates a block diagram showing a system of providing data sets to the data warehouse comprising: a posting system 100, timestamping component using the internal clock of the posting system 102 for timestamping of data sets being entered in the posting system. Timestamped data sets 103 are stored in an online relational database of the online transaction processing system (OLTP) system 104. The online relational database 108 comprises one or more tables each configured to store a plurality of data sets. The posting system's internal clock 102 is synchronized with the online transaction processing system's master clock 106 in order to make sure that that the data sets receive a correct timestamp. Typically posting system 100 is an integral part of OLTP system 104.

A timestamp of a data set has a seven-part value that consists of a CPU-date and CPU-time expressed in years, months, days, hours, minutes, seconds, and microseconds. However, there is also the possibility of using a date stamp in the form of CPU-date. In this case, the CPU-date stamp can be found in the header of the budget single item. Since time interval (delta) is equal or greater than a maximum latency time between time stamping and storage in data base, different time windows can be used in order to prevent any data sets from being omitted during extraction.

In any case, the time window that assures not omitting any data sets during the extraction process must be sufficiently large to include in the most recent extraction all the data sets which have received a timestamp at the time of the last extraction but were not imported yet. In one embodiment only those data sets which were booked a certain safety time interval before the start of the extraction are selected for actual extraction, in order to avoid extracting the data sets for which posting is still going on. Further hardware characteristics must be taken into account for selecting a size of the time window for the extraction. CPU-date stamping, for example, represents the considerable time window because there is in-built safety of one day overlap.

Data sets that have received a timestamp are stored in the next step, in an online relational database 108 of the online transaction processing system. Then, program module performs data query 114 of online relational database at the predefined time interval or in response to receipt of a request from data warehouse. A lower limit of the extraction time window 110 is defined as first reference time, the first reference time being the time of the previous database query (t1) minus a time interval (delta). However, upper limit of the extraction time window 112 depends on the embodiment of the invention. In one embodiment, upper limit is equal to actual system time when query is performed. In another emodiment, upper limit is equal to actual system time minus time interval (delta).

The data extractors consist of multiple programs, that are designed to extract from the OLTP system the data sets in such a way that the data traffic will be limited to minimum between the source system and the data warehouse. Network 116 that interconnects the OLTP system 104 and the data warehouse 118 allows the data traffic between the OLTP and data warehouse in the form of packets via Application Link Enabling (ALE) that makes possible message based integration between different applications. By using ALE one can connect the applications regardless of the platforms used, where SAP R/2 and R/3 can easily cooperate with other, external systems.

The extracted data sets will be saved in the data warehouse in the ODS objects (operational data store objects) 120. This enables at the later time to filter out data sets that have been transferred twice and it will assure the transfer of the latest data

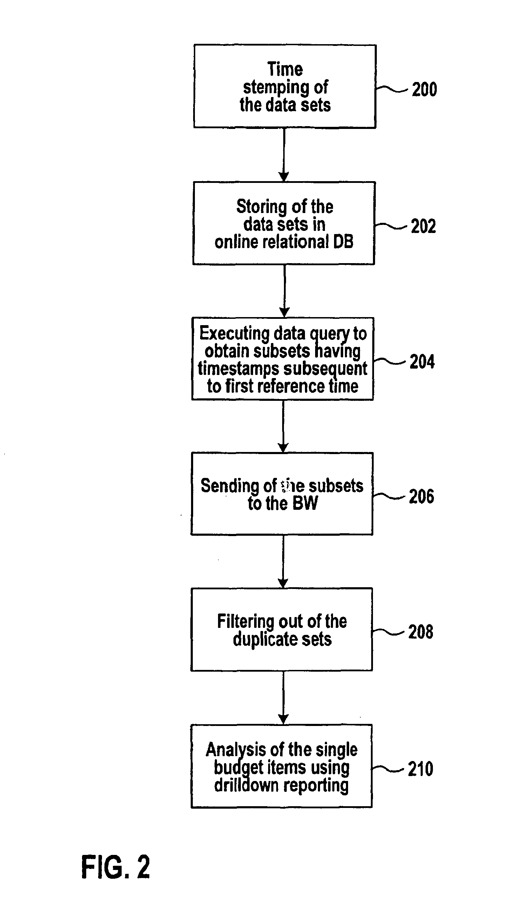

Figure 2 is a flow chart illustrating steps of a method of providing data subsets to a data warehouse. The timestamping of the data sets 200 allows updating of the data warehouse database.

Timestamped data sets are stored 202 in an online relational database. In the next step, a query is executed 204 in order to obtain a subset of the data sets having timestamps subsequent to first reference time. This allows extraction from OLTP system's relational database of only those data sets that have changed since the last extraction point. The frequency of extraction can be manually established and it is also controlled by parameters.

In the next step, 206 the subsets of the data sets are sent to the data warehouse. However, the data that was already imported stays unchanged and does not need to be deleted at the time of the new import. Thus, instead of copying the entire budget database as it was the case in the prior art, the extraction interval of data sets can be predetermined since timestamps make it possible to recognize what data sets have been already imported. However, because of the use of the time window some portion of the subsets extracted from the data sets have been transferred twice, for this reason ODS-objects are used to filter out 208 the duplicate data subsets.

In the last step, all the filtered data sets are available for analysis 210 in the data warehouse at the level of detail equal to the level available previously only in OLTP system, that means that user by pointing at any particular data in the summary will immediately see all its detail components.

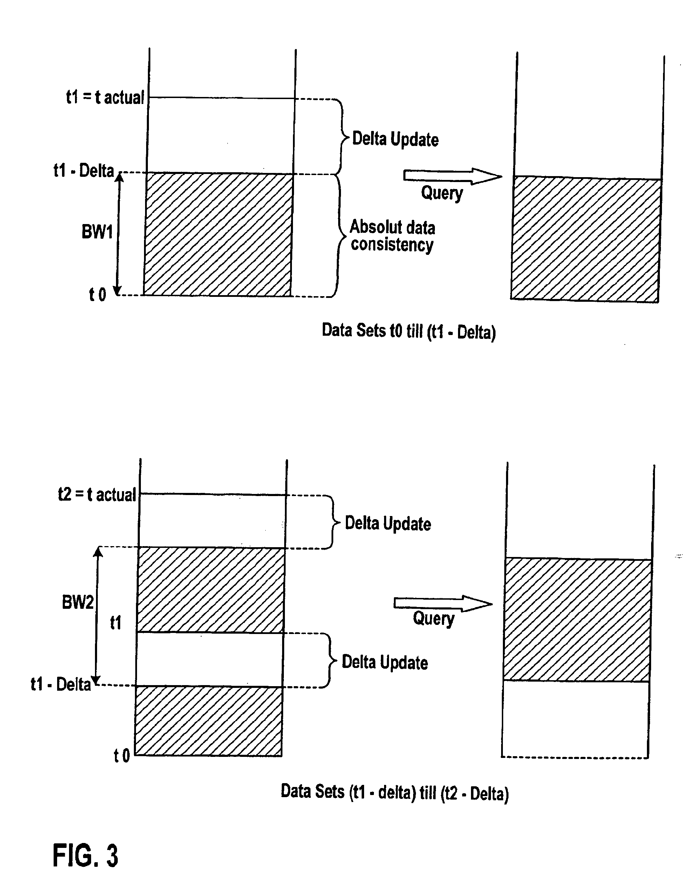

Figure 3 illustrates an embodiment of the invention, where a database query BW1 of online relational database is executed to obtain a subset of the data sets having timestamps enclosed in the extraction interval between initial time t zero and actual system time t1 minus time interval delta. The resulting extracted data sets are sent to data warehouse.

Then, another, consecutive database query BW2 is executed to obtain a subset of the data sets having timestamps enclosed in the extraction interval between time t1 minus time interval delta and actual system time t2 minus time interval delta. The result is sent again to the data warehouse.

Data queries of the online relational database are performed on a continuous basis to obtain subsets of the data sets having timestamps within a time window between a lower first reference time, i.e. the time of the previous query minus time interval delta, and an upper second reference time, i.e. the actual system time of the consecutive query minus time interval delta. The results of each data query is sent to the data warehouse for further analysis. It is to be noted that in this embodiment no elimination of duplicate data sets by the data warehouse is required as the choice of the time window ensures that such duplicate data sets are not included in the database queries.

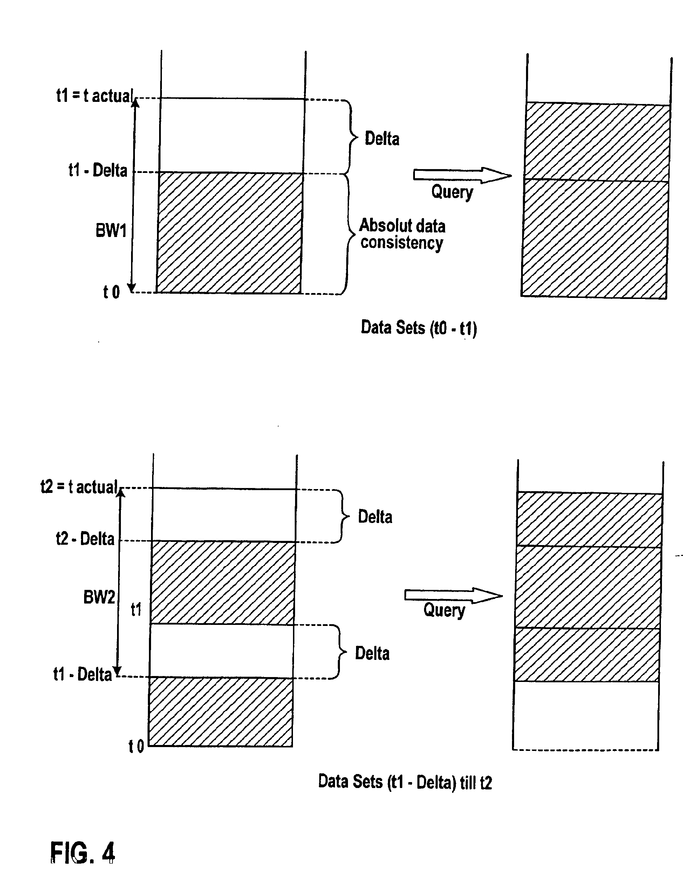

In another embodiment of the invention, as it is shown in the Figure 4, a data query BW1 of online relational database is executed to obtain a subset of the data sets having timestamps enclosed in the extraction interval between initial time t zero and actual system time t1.

Next a data query BW2 is executed to obtain a subset of the data sets having timestamps enclosed in the extraction interval between time t1 minus time interval delta and actual system time t2. The results of consecutive queries are sent to data warehouse. Also in this embodiment the steps of extracting data sets and sending them to data warehouse are performed on a repeated basis.

Again, data queries of the online relational database are performed on a continuous basis to obtain subsets of the data sets having timestamps within a time window between a lower first reference time, i.e. the time of the previous query minus time interval delta, and an upper second reference time. In contrast to the embodiment of Figure 3 the second reference time is the actual system time of the consecutive query. It is to be noted that in this embodiment the elimination of duplicate data sets by the data warehouse is required as the time window for the query also covers a system latency time interval. This system latency time interval is covered twice by the previous query and the consecutive query in order to ensure that all data sets having a time stamp within the system latency time interval are provided to the data warehouse.

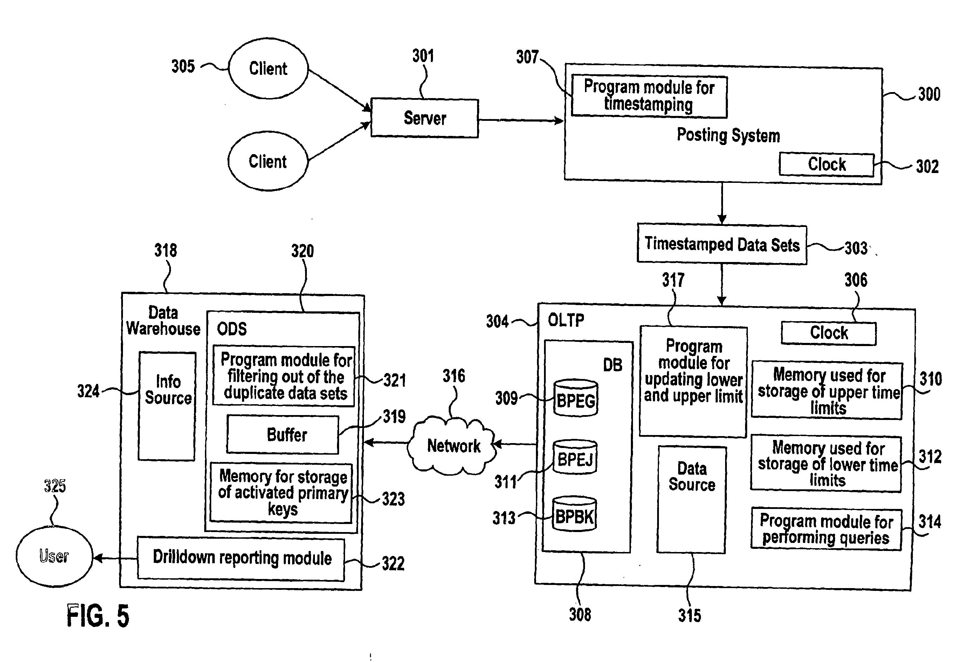

Figure 5 is a detailed block diagram showing a system of providing data sets to the data warehouse. The embodiment of figure5 is based on the embodiment of the figure1; like elements are referenced by like reference numbers having added 200.

The posting system receives its data sets from R/3 server 301 being coupled to different clients 305. Then, only the data sets that have been checked for consistency are entered in the posting system to assure the data integrity.

Timestamping of the data sets is performed by the program module 307 to make it possible later in the data warehouse to recognize what data sets have been imported. A timestamp of a data set has a seven-part value that consists of a CPU-date and CPU-time expressed in years, months, days, hours, minutes, seconds, and microseconds. SAP R/3-System, for example, logs always in each case two timestamps per data source and updating mode. Those two timestamps enclose a selection interval. In order to be able to select the data sets from the single item tables BPEG 309, BPEJ 311 and BPBK 313, data sources 315 are used in the OLTP system. Thus, all the changes in the original budget that were not included in the summarized tables can be now imported into data warehouse.

Program module 317 for updating lower and upper limits is used in order to prevent any data sets from being omitted during the extraction process. Lower and upper limits of the time window for extraction of data sets are defined in such a way that first reference time is a lower limit, the first reference time being the time of the previous database query (t1) minus a time interval (delta). However, upper limit of the extraction time window depends on the embodiment of the invention. In one embodiment, upper limit is equal to actual system time when query is performed.

In another emodiment, upper limit is equal to actual system time minus time interval (delta). In any case, the time window that assures not omitting any data sets during the extraction process must be so large that all data sets which have received a timestamp at the time of the last extraction but were not imported yet, are included in the most recent extraction.

The extracted data sets are imported into the data warehouse. There they are temporary stored in the buffer 319. An ODS object 320 describes a consolidated data set from one or several information sources, so called InfoSources. This data set can be evaluated using a query. An ODS object contains a key (for example, document number, position) as well as data fields that, as key figures, can also contain character fields (for example, customer). Data sets in ODS objects are stored in transparent, flat database tables.

Filtering module 321 scans and eliminates duplicate data sets contained in the subsets which have been received by the data warehouse as a result of previous and actual database query. The process of filtering out of the sets that have been imported twice is done by checking the primary keys 323 and eliminating these data sets which primary keys have been already activated. As soon as the data set with the identical primary key is found in the ODS object, the delta is calculated; if it is zero, the primary keys are identical and such data set is overwritten, thus, duplication of data in the data warehouse is avoided. In order to have access to the extracted subsets of the data sets the newly developed InfoSources 324 are used.

The filtered out data can be made available to analysts for the drilldown reporting 322. Drilldown reporting is a feature particularly important to users 325 such as managers and analysts that need reach beyond the summary information. The present invention makes this feature available for budget reporting. By pointing at any particular data in the summary, the detail components of the particular data element pointed to can be shown. Many different levels may be defined: from grand totals, the user may go to totals, partial detail, and full detail. Then, the user may go back up again to the totals. Thus, for the first time in the budget reporting the user can reach the level of detail in the analysis of the information available in the data warehouse that is equal to the level of detail available before only in the OLTP system.

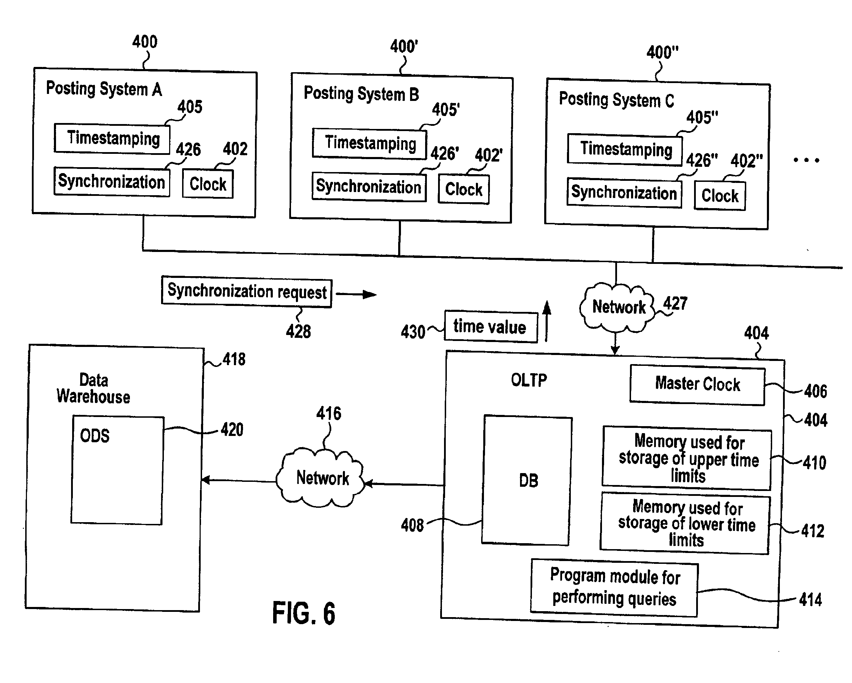

Figure 6 shows a block diagram that is similar to the embodiment of figure 1. Elements of the embodiment of figure 6 that correspond to elements of the embodiment of figure 1 are designated by like reference numerals having added 300. Posting Systems A, B, C, ... are coupled to OLTP 404 by means of network 427, such as an Ethernet. The posting systems A, B, C, ... are of similar design. For example, posting system A 400 has program module 405 for timestamping of data sets to be provided from the posting system A 400 to the OLTP 404 via the network 427 (cf. timestamped data sets 103 as shown in figure 1). The program module 405 uses the local clock 402 of the posting system A 400 for performing the timestamping. Further, the posting system A 400 has a program module 426 for synchronizing the local clock 402 with a master clock 406 running on the OLTP 404.

The posting system B 400 ', posting system C 400 '', ... have elements that correspond to those explained above with respect to posting system A 400. The local clocks 402, 402 ', 402 ' ', ... of the respective posting systems require synchronization with the master clock 406 to ensure proper operation of the data processing system.

In the following a synchronization procedure is explained by way of example with respect to posting system A 400 without restriction of generality. The same synchronization procedure is implemented by the other posting systems.

In order to initiate a synchronization procedure the program module 426 sends a synchronization request 428 to OLTP 404 via the network 427. In response the OLTP 404 generates a synchronization message 430. The synchronization message 430 carries a time value that is transmitted from OLTP 404 via the network 427 to the posting system A400 and is received by the program module 426 for re-synchronizing the local clock 402 using the time value contained in the synchronization message 430.

Depending on the implementation the transmission time of the synchronization message 430 is taken into consideration for increased precision of the synchronization between the local clocks and the master clock. For example, the OLTP 404 stores the transmission times to the various posting systems. In this case the OLTP 404 looks up the transmission time to posting system A400 when the synchronization request 428 is received. Next, the OLTP 404 reads the current time from the master clock 406 and adds the required transmission time which yields the time value for the synchronization message 430. When the synchronization message 430 is received by the posting system A400 the time value corresponds to the current time of the master clock 406.

Alternatively the time value of the synchronization message 430 is the current time of the master clock 406. In this instance the program module 426 can take into account the transmission time for increased precision of the synchronization of the local clock 402. This can be done by storing the transmission time between OLTP 404 and the posting system A 400 locally in the posting system A 400 for look up by the program module 426.

### List of Reference Numerals

- 100: Posting System
- 102: Clock of the Posting System
- 103: Timestamped Data Sets
- 104: Online transaction processing system (OLTP)
- 106: Clock of the OLTP
- 108: Database of the OLTP
- 110: Memory used for storage of upper time limits
- 112: Memory used for storage of lower time limits
- 114: Program module for performing queries
- 116: Network
- 118: Data Warehouse
- 120: ODS Object
- 300: Posting System
- 301: Server
- 302: Clock of the Posting System
- 303: Timestamped Data Sets
- 304: Online transaction processing system (OLTP)
- 305: Client
- 306: Clock of the OLTP
- 307: Program module for timestamping
- 308: Database of the OLTP
- 309: Table with single items BPEG
- 310: Memory used for storage of upper time limits
- 311: Table with single items BPEJ
- 312: Memory used for storage of lower time limits
- 313: Table with single items BPBK
- 314: Program module for performing queries
- 315: Data Source
- 316: Network
- 317: Program module for updating lower and upper limit
- 318: Data Warehouse
- 319: Buffer
- 320: ODS object
- 321: Program module for filtering out of the duplicate data sets
- 322: Drilldown reporting module
- 323: Memory for storage of activated primary keys
- 324: InfoSource
- 325: User
- 400: Posting system
- 400': posting system
- 400": posting system
- 402: Local clock
- 402': local clock
- 402": local clock
- 404: OLTP
- 406: Master clock
- 408: Database
- 410: Memory
- 412: Memory
- 414: Program module
- 416: Network
- 418: Data warehouse
- 420: ODS object
- 405: Program module
- 405': program module
- 405": program module
- 426: Program module
- 426': program module
- 426": program module
- 427: Network
- 428: Synchronization request
- 430: Synchronization message

## Claims

1. A data processing system for providing data sets to a data warehouse, the system comprising:
a) a posting system (100; 300; 400, 400', 400") comprising:
• an internal clock (102; 302; 402, 402',402"); and
- a timestamping component (105; 307; 405, 405', 405) using the internal clock (102; 302; 402, 402',402") for timestamping of data sets (103; 303) being entered in the posting system, wherein the timestamp of a data set has a seven-part value that consists of a CPU-date and CPU-time expressed in years, months, days, hours, minutes, seconds, and microseconds, or
- wherein the timestamp of a data set is a date stamp in the form of CPU-date, said CPU-date stamp being contained in the header of a budget single item;
b) an online transaction processing system (104) comprising a master clock (106), wherein the posting system's internal clock (102; 302; 402, 402',402") is synchronized with the master clock in order to make sure that the data sets receive a correct timestamp ;
c) data extractors, the data extractors consisting of multiple programs that are designed to extract from the online transaction processing system the data sets in such a way that data traffic will be limited to minimum between the source system and the data warehouse, wherein the online transaction processing system (104) is interconnected by a network (116) with the data warehouse (118), the network allowing the data traffic between the online transaction processing system and data warehouse in the form of packets via Application Link Enabling;
wherein the data processing system is configured for:
- storing the timestamped data sets (103) in an online relational database (108; 308; 408) of the online transaction processing system (104), wherein the online relational database (108; 308; 408) comprises one or more tables (309, 311,313) each configured to store a plurality of the data sets (103; 303);
- executing data queries (314; 414) of the online relational database (108; 308; 408) on a continuous basis to respectively obtain a subset of the data sets (103; 303) having timestamps within a time window between first reference time and a second reference time,
o wherein the first reference time is the time of the previous database query (t1) minus a time interval (delta),
o wherein the second reference time is the actual system time of a consecutive query (t2) minus the time interval (delta),
o wherein the time interval (delta) is equal or greater than a maximum latency time between the timestamping and the storing in the online relational database (108; 308; 408),
∘ wherein the time window, that assures not omitting any data sets during the extraction, is sufficiently large to include in the most recent extraction all the data sets which have received a timestamp at the time of the last extraction but were not imported yet
∘ wherein the time interval (delta) is sufficiently large to avoid extracting the data sets for which posting is still going on, whereby hardware characteristics must be taken into account for selecting a size of the time window for the extraction;
- sending of the subsets obtained for each of the queries to the data warehouse (118; 318; 418) for further analysis whereby the extracted data sets are stored in the data warehouse in operational data store objects (120).

## Patentansprüche

1. Datenverarbeitungssystem zum Bereitstellen von Datensätzen an eine Datenbank, wobei das System umfasst:
a) ein Buchungssystem (100; 300; 400, 400', 400") umfassend:
• einen internen Taktgeber (102; 302; 402, 402',402"); und
- eine Zeitstempelungskomponente (105; 307; 405, 405', 405), die den internen Taktgeber (102; 302; 402, 402',402") für die Zeitstempelung von Datensätzen (103; 303) verwendet, die in das Buchungssystem eingegeben werden, wobei der Zeitstempel eines Datensatzes einen siebenteiligen Wert aufweist, der aus einem CPU-Datum und einer CPU-Zeit besteht, die in Jahren, Monaten, Tagen, Stunden, Minuten, Sekunden und Mikrosekunden angegeben werden, oder
- wobei der Zeitstempel eines Datensatzes ein Datumsstempel in Form eines CPU-Datums ist, wobei der CPU-Datumsstempel im Header eines einzelnen Budgetpostens enthalten ist;
b) ein Online-Transaktionsverarbeitungssystem (104), das einen Haupttaktgeber (106) umfasst, wobei der interne Taktgeber (102; 302; 402, 402',402") des Buchungssystems mit dem Haupttaktgeber synchronisiert wird, um sicherzustellen, dass die Datensätze einen korrekten Zeitstempel erhalten;
c) Datenextraktoren, wobei die Datenextraktoren aus mehreren Programmen bestehen, die dafür ausgelegt sind, die Datensätze auf solche Weise aus dem Online-Transaktionsverarbeitungssystem zu extrahieren, dass der Datenverkehr zwischen dem Ursprungssystem und der Datenbank auf ein Minimum reduziert wird, wobei das Online-Transaktionsverarbeitungssystem (104) über ein Netz (116) mit der Datenbank (118) verbunden ist, wobei das Netz den Datenverkehr zwischen dem Online-Transaktionsverarbeitungssystem und der Datenbank in Form von Paketen über Application Link Enabling ermöglicht;
wobei das Datenverarbeitungssystem so ausgelegt ist, dass es:
- die zeitgestempelten Datensätze (103) in einer relationalen Online-Datenbank (108, 308; 408) des Online-Transaktionsverarbeitungssystems (104) speichert, wobei die relationale Online-Datenbank (108; 308; 408) eine oder mehrere Tabellen (309, 311, 313) umfasst, die jeweils so gestaltet sind, dass sie mehrere von den Datensätzen (103; 303) speichern;
- Datenabfragen (314; 414) der relationalen Online-Datenbank (108; 308; 408) auf kontinuierlicher Basis durchführt, um jeweils einen Untersatz von den Datensätzen (103; 303) zu erhalten, die Zeitstempel in einem Zeitfenster zwischen einer ersten Bezugszeit und einer zweiten Bezugszeit aufweisen,
o wobei die erste Bezugszeit die Zeit der vorangehenden Datenbankabfrage (t1) minus eines Zeitintervalls (delta) ist,
o wobei die zweite Bezugszeit die tatsächliche Systemzeit einer folgenden Abfrage (t2) minus des Zeitintervalls (delta) ist,
o wobei das Zeitintervall (delta) mindestens so lang ist wie eine maximalen Latenzzeit zwischen der Zeitstempelung und der Speicherung in der relationalen Online-Datenbank (108; 308; 408,
o wobei das Zeitfenster, das gewährleistet, dass während der Extraktion keine Datensätze ausgelassen werden, ausreichend groß ist, um die jüngste Extraktion sämtlicher Datensätze, die bei der letzten Extraktion einen Zeitstempel erhalten haben, aber noch nicht importiert worden sind, einzuschlzeßen,
o wobei das Zeitintervall (delta) ausreichend groß ist, um eine Extraktion der Datensätze zu vermeiden, deren Buchung noch nicht abgeschlossen ist, wobei für die Auswahl einer Größe des Zeitfensters für die Extraktion Hardware-Eigenschaften berücksichtigt werden müssen;
- die Untersätze, die für die einzelnen Abfragen erhalten worden sind, für eine weitere Analyse zur Datenbank (118; 318; 418) schickt, wobei die extrahierten Datensätze in operationalen Datenbankobjekten (120) in der Datenbank gespeichert werden.

## Revendications

1. Système de traitement de données destiné à fournir des ensembles de données à un entrepôt de données, le système comprenant :
a) un système d'annonce (100 ; 300 ; 400, 400', 400") comprenant :
• une horloge interne (102 ; 302 ; 402, 402', 402") ; et
- un composant d'horodatage (105 ; 307 ; 405, 405', 405) utilisant l'horloge interne (102 ; 302 ; 402, 402', 402") pour l'horodatage d'ensembles de données (103 ; 303) entrés dans le système d'annonce, où l'horodatage d'un ensemble de données présente une valeur à sept chiffres, consistant en une date CPU et en un temps CPU, exprimés en années, mois, jours, heures, minutes, secondes et microsecondes, ou
- dans lequel l'horodatage d'un ensemble de données est un horodatage de temps sous la forme d'un temps CPU, ledit horodatage de temps CPU étant contenu dans l'en-tête d'un poste budgétaire unique ;
b) un système de traitement de transactions en ligne (104) comprenant une horloge maître (106), dans lequel l'horloge interne (102 ; 302 ; 402, 402', 402") du système d'annonce est synchronisé avec l'horloge maître pour veiller à ce que les ensembles de données reçoivent un horodatage correct ;
c) des extracteurs de données, les extracteurs de données consistant en une multitude de programmes conçus pour extraire les ensemble de données à partir du système de traitement de transactions en ligne, de manière à ce que le trafic de données soit limité à un minimum entre le système source et l'entrepôt de données, où le système de traitement de transactions en ligne (104) est interconnecté à l'entrepôt de données (118) au moyen d'un réseau (116), le réseau permettant le trafic de données entre le système de traitement de transactions en ligne et l'entrepôt de données sous la forme de paquets, par le biais d'un Application Link Enabling ;
dans lequel le système de traitement de données est configuré pour :
- stocker les ensembles de données horodatés (103) dans une base de données relationnelle en ligne (108 ; 308 ; 408) du système de traitement de transactions en ligne (104), où la base de données relationnelles en ligne (108 ; 308 ; 408) comprend un ou plusieurs tableaux (309, 311, 313) respectivement configurés pour contenir une pluralité d'ensembles de données (103 ; 303) ;
- l'exécution de demandes de données (314 ; 414) de la base de données relationnelles en ligne (108 ; 308 ; 408) sur une base continue pour obtenir respectivement un sous-ensemble d'ensembles de données (103 ; 303) comportant des horodatages dans une fenêtre temporelle entre un premier temps de référence et un deuxième temps de référence,
o dans lequel le premier temps de référence est le temps de la demande de base de données précédente (t1) moins un intervalle de temps (delta),
o dans lequel l'intervalle de temps (delta) est égal ou supérieur à un temps de latence maximum entre l'horodatage et l'enregistrement dans la base de données relationnelles en ligne (108 ; 308 ; 408),
o dans lequel la fenêtre temporelle, laquelle empêche l'omission de tout ensemble de données pendant l'extraction, est suffisamment grande pour inclure, dans l'extraction la plus récente, tous les ensembles de données ayant reçu un horodatage lors de la dernière extraction, mais n'ayant pas encore été importées,
o dans lequel l'intervalle de temps (delta) est suffisamment grand pour empêcher l'extraction des ensembles de données pour lesquels une annonce est toujours en cours, des caractéristiques informatiques devant ici être prises en compte pour la sélection d'une taille de fenêtre temporelle en vue de l'extraction ;
l'envoi des sous-ensembles obtenus pour chacune des demandes, à l'entrepôt de données (118 ; 318 ; 418) pour une analyse complémentaire, les ensembles de données extraits étant stockés dans l'entrepôt de données dans des objets de stockage de données opérationnelles (120).
